# EUROPEAN PATENT APPLICATION

(11) **EP 4 586 412 A1**
(43) Date of publication of application: **16.07.2025**
(21) Application number: 23893013.5
(22) Date of filing: 08.05.2023
(51) Int. Cl.: H01R 13/00, G02B 6/38

(54) **OPTICAL FIBER CONNECTOR HAVING SELF-FLOATING CORE**

(30) Priority: 21.11.2022 CN 202211462641
(71) Applicant: Jonhon Optronic Technology Co., Ltd., Luoyang, Henan 471000 (CN)
(72) Inventor: SUN, Mingjie, Luoyang, Henan 471000 (CN); GAO, Jian, Luoyang, Henan 471000 (CN); YANG, Xiaonan, Luoyang, Henan 471000 (CN); DONG, Weiqiang, Luoyang, Henan 471000 (CN); LI, Weike, Luoyang, Henan 471000 (CN); WU, Xueshun, Luoyang, Henan 471000 (CN)
(74) Representative: Osterhoff, Utz
(86) International application number: PCT/CN2023/092847
(87) International publication number: WO 2024/108912

(57) **Abstract**

Disclosed is an optical fiber connector having a self-floating core, including a plug component, a bonding sleeve, and also a supporting sleeve made of an elastic material. One end of the supporting sleeve is connected with the plug component, and the other end is connected with the bonding sleeve; and an end portion of an optical cable is nested in the supporting sleeve, and an internal cavity, through which an optical fiber passes, is formed in the supporting sleeve. In the present invention, by using the supporting sleeve as a branch part between the bonding sleeve and the plug component, on the basis of retaining a stepped floating structure of the bonding sleeve, a secondary floating function is added to achieve a two-stage floating function and compensate a primary floating structure of a plug; and meanwhile, an core plug can swing in any radial direction to achieve a floating function in multiple directions, which solves the problem that an original structure can only swing axially in a single ditrction, and solves the problems of a too high assembly requirement and a high failure rate in product use of an existing connector at the same time.

## Description

### TECHNICAL FIELD

The present invention relates to an optical fiber connector, and in particular to an optical fiber connector having a self-floating core.

### BACKGROUND

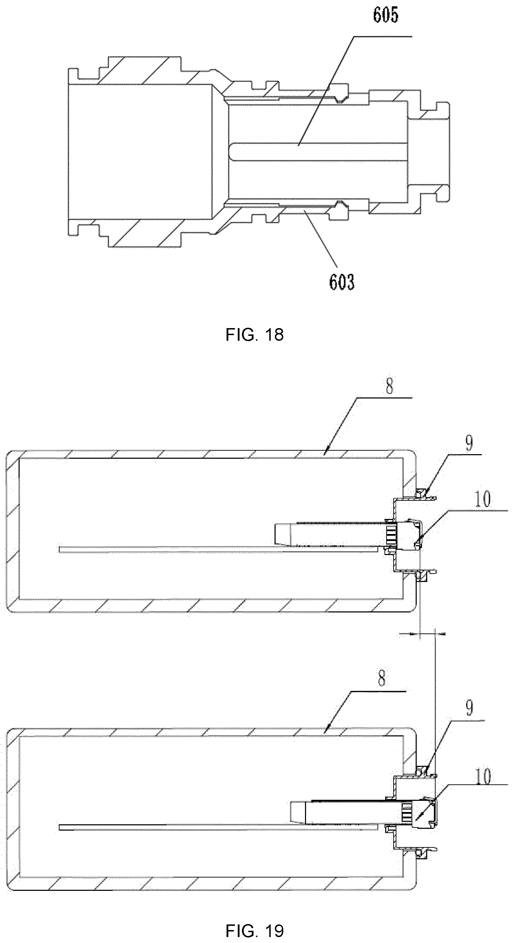

Outdoor optical fiber connectors are widely used in outdoor RRU (Remote Radio Unit) equipment. In each RRU equipment, an optical fiber interface is mostly in a form shown in FIG. 19, including a built-in optical module plug and an external socket. The optical module plug is used for transmitting an optical signal after it is mated with an optical fiber connector. The socket is matched with an outer housing of the optical fiber connector to play tensile and sealing roles for the connector.

However, in an actual application process, optical modules from different manufacturers are mounted at different positions, and optical module plugs have inconsistent axial sizes, as shown in FIG. 19. Therefore, it requires an adaptive optical fiber connector to have high versatility, that is, the connector needs to have an axially adjustable function to adapt to the equipment requirements of different manufacturers.

A structure of an existing outdoor optical fiber connector usually features including a plug component and a floating mechanism which includes an outer housing, a bracket, and a bonding sleeve. The bracket can move axially relative to the bonding sleeve, the outer housing can rotate and move relative to the bracket, and a locking structure matched with the socket is arranged at a front end of the outer housing. Locking teeth are arranged on the bonding sleeve; a locking pawl is arranged at a tail end of the bracket; a locking groove matched with the locking pawl is formed between two adjacent locking teeth; and an internal cone surface matched with the locking pawl is arranged on an inner wall of the outer housing to be used for locking the locking pawl, so that locking and tensile functions of the connector are achieved.

When in use, an operator first inserts the plug component into the corresponding socket to adjust a position of the bracket relative to the bonding sleeve, and then moves the outer housing to make a connecting structure on the outer housing matched with a corresponding structure on the socket to achieve tight locking. During forward movement of the outer housing, the internal cone surface of the outer housing squeezes the locking pawl on the bracket to lock it in the locking groove, thereby achieving tension resistance of a cable.

There are the following advantages in the prior art that:
1. An existing structure can only deflect in an axial direction, that is, in a single plugging direction of connectors.
2. An axial distance adjustment method of the existing structure is stepped, and an adjustment distance is an integer multiple of a center distance of the two adjacent locking grooves of the bonding sleeve. If the adjustment distance is not the integer multiple of the center distance, after the bracket moves the adjustment distance in use, the locking pawl will fall into another locking groove under the thrust of a corresponding cone surface of the outer housing rather than directly falling into the locking grooves, so that there is a certain deviation between the bracket and the standard adjustment distance, which leads to two problems:
   (1) If the locking pawl falls into the rear locking groove on the bonding sleeve, a branch optical fiber at a front end of the bonding sleeve is tensioned; and if a tension force is too large, the optical fiber will break, and a transmission signal will be interrupted.
   (2) If the locking pawl falls into the front locking groove on the bonding sleeve, the branch optical fiber at the front end of the bonding sleeve is squeezed, and a pin in the plug component retracts, which will drive the branch optical fiber to move backward. In the prior art, a hollow bundle tube or an armor bundle tube is sleeved outsides each branch optical fiber. Due to a limited space of the hollow bundle tube or the armor bundle tube sleeved outsides the branch optical fiber, the branch optical fiber is excessively bent therein to produce bending stress, which will also cause breakage of the optical fiber and interruption of the transmission signal.
3. Due to the above disadvantage 2, this structure has a strict requirement for an excess branch end length of the optical cable, which leads to a difficult assembly process, and a high failure rate in product assembly and use.

### SUMMARY

In order to solve the above technical problems, the present invention provides an optical fiber connector having a self-floating core.

An objective of the present invention is achieved through the following technical solution. An optical fiber connector having a self-floating core proposed according to the present invention includes a plug component, a bonding sleeve, and also a supporting sleeve made of an elastic material. One end of the supporting sleeve is connected with the plug component, and the other end is connected with the bonding sleeve; and an end portion of an optical cable is nested in the supporting sleeve, and an internal cavity, through which an optical fiber passes, is formed in the supporting sleeve.

Further, a groove is formed in the supporting sleeve to provide an avoidance space for the supporting sleeve to bend in a radial direction; and the groove is axially distributed on an outer wall of the supporting sleeve, and extends in a direction perpendicular to an axial direction of the supporting sleeve.

Further, a cross section of a supporting sleeve body in the radial direction is rectangular; the groove includes a supporting sleeve groove I and a supporting sleeve groove II; the supporting sleeve groove I is formed in a wide edge of the supporting sleeve; the supporting sleeve groove II is formed in a narrow edge of the supporting sleeve; and the supporting sleeve groove I and the supporting sleeve groove II are staggered in the axial direction.

Further, the cross section of the supporting sleeve body is circular or elliptic.

Further, an axially extending connecting bulge is arranged at a front end of the supporting sleeve, a through hole communicating with the internal cavity is formed in the connecting bulge, and a locking block is arranged at a front end portion of the connecting bulge; and the connecting bulge and the locking block are nested in a cavity of the plug component to achieve a tensile function between the supporting sleeve and the plug component.

Further, a connecting groove is formed in the connecting bulge at the front end portion of the supporting sleeve or a through groove at a rear end portion of the plug component; a connecting convex key is correspondingly arranged on the through groove at the rear end portion of the plug component or the connecting bulge at the front end portion of the supporting sleeve; and the connecting groove is mutually matched with the connecting convex key.

Further, a rear end portion of the supporting sleeve is located in a cavity formed in a front end portion of the bonding sleeve; and glue is filled in the cavity of the front end portion of the bonding sleeve to fix the supporting sleeve.

Further, a limiting key and an axially extending strengthening bulge are arranged at the rear end portion of the supporting sleeve; a limiting keyway matched with the limiting key is formed in an inner wall of the front end portion of the bonding sleeve; a through hole, which communicates with the internal cavity for a branch optical fiber to pass through, is formed in the strengthening bulge; and at least one glue filling hole is formed in a wall of the strengthening bulge.

Further, a bracket is slidably sleeved outsides the plug component, the supporting sleeve, and the bonding sleeve; an outer housing is slidably sleeved outsides the bracket; a plurality of locking teeth are distributed on an outer wall of the supporting sleeve in the axial direction; a locking groove is formed between two adjacent locking teeth; axially extending suspension arm hole which extends through a wall of the bracket is formed in the wall; an axially extending suspension arm is arranged in the suspension arm hole; a locking pawl matched with the locking groove is arranged at an end portion of the suspension arm, and is nested in the locking groove in a natural state; a projection is arranged on an outer wall of the suspension arm; an internal cone surface is arranged on the outer housing, and squeezes the projection to achieve strong matching between the locking pawl and the locking groove.

Further, a guide key in the axial direction is arranged on a wall of an internal cavity of the bracket; and a sliding keyway slidably matched with the guide key is formed in an outer wall of the bonding sleeve.

Compared with the prior art, the present invention has the beneficial effects that: in the present invention, on the basis of the existing connector, by using the supporting sleeve as a branch part between the bonding sleeve and the plug component to replace an original branch structure, on the basis of retaining a stepped floating structure of the bonding sleeve, a secondary floating function is added to achieve a two-stage floating function and compensate a primary floating structure of a plug; and meanwhile, a core plug can swing in any radial direction to achieve a floating function in multiple directions, which solves the problem that an original structure can only swing axially in a single ditrction, and solves the problems of a too high assembly requirement and a high failure rate in product use of an existing connector at the same time.

The above description is only an overview of the technical solution of the present invention. To understand more clearly the technical means of the present invention, to implement in accordance with the contents of the specification, and to make the above and other objectives, features, and advantages of the present invention more obvious and understandable, better embodiments are particularly described below, and with reference to the accompanying drawings, the detailed description is as follows.

### BRIEF DESCRIPTION OF DRAWINGS

FIG. 1 is a sectional view of embodiment 1 of the present invention;
FIG. 2 is a schematic exploded diagram of the embodiment shown in FIG.1;
FIG. 3 is a schematic diagram of a core part in the embodiment shown in FIG.1;
FIG. 4 is a sectional view of the embodiment, shown in FIG.3, with a tail sheath removed;
FIG. 5 is a schematic diagram of a bracket in the embodiment shown in FIG.1;
FIG. 6 is a schematic diagram of an outer housing in the embodiment shown in FIG.1;
FIG. 7 is a schematic exploded diagram of a plug component in the embodiment shown in FIG.1;
FIG. 8 is a schematic diagram of a supporting sleeve in the embodiment shown in FIG.1;
FIG. 9 is a schematic diagram of FIG. 8 from another perspective;
FIG. 10 is a sectional view of FIG. 8;
FIG. 11 is a front view of FIG. 8;
FIG. 12 is a top view of FIG. 11;
FIG. 13 is a schematic diagram of a supporting sleeve in embodiment 2 of the present invention;
FIG. 14 is a schematic diagram of a supporting sleeve in embodiment 3 of the present invention;
FIG. 15 is a schematic diagram of assembly of the supporting sleeve and the plug component in embodiment 1 of the present invention;
FIG. 16 is a schematic diagram of assembly of the supporting sleeve and a bonding sleeve in embodiment 1 of the present invention;
FIG. 17 is a schematic diagram of assembly of the bonding sleeve and the tail sheath in embodiment 1 of the present invention;
FIG. 18 is a sectional view of the bracket in embodiment 1 of the present invention;
FIG. 19 is a schematic diagram of existing RRU equipment; and
FIG. 20 is a schematic diagram of a multi-sheath structure in an existing connector.

### [Reference numerals]

1-plug component, 101-upper plug housing, 102-lower plug housing, 10201-connecting groove, 103-core plug, 2-supporting sleeve, 201-internal cavity, 202-connecting convex key, 203-supporting sleeve groove I, 204-supporting sleeve groove II, 205-glue filling hole, 206-limiting key , 207-connecting bulge, 208-locking block, 209-strengthening bulge, 3-bonding sleeve, 301-locking teeth, 302-locking groove, 303-sliding keyway, 304-glue filling region, 305-limiting keyway, 4-tail sheath, 5-optical cable, 501-branch optical fiber, 6-bracket, 601-locking pawl, 602-suspension arm hole, 603-suspension arm, 604-projection, 605-guide key, 7-outer housing, 701-internal cone surface, 8-RRU equipment, 9-socket, 10-optical module plug, 11-crimp element, and 12-bundle tube.

### DETAILED DESCRIPTION OF THE EMBODIMENTS

The technical solutions in the embodiments of the present invention are clearly and completely described below in conjunction with the drawings in the embodiments of the present invention, and apparently, the embodiments described are merely a part rather than all of the embodiments of the present invention. All other embodiments obtained by those of ordinary skilled in the art based on the embodiments of the present invention without creative efforts shall fall within the protection scope of the present invention.

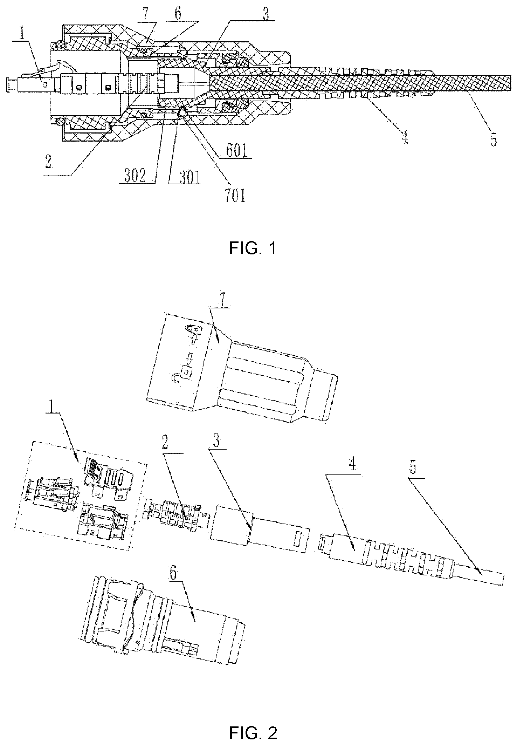

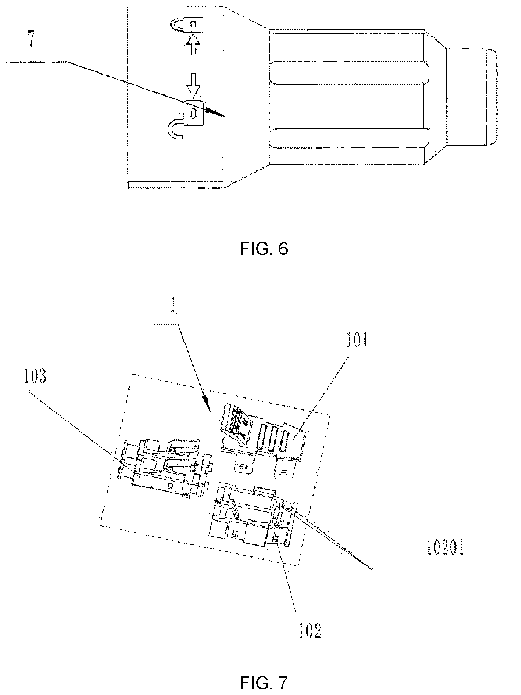

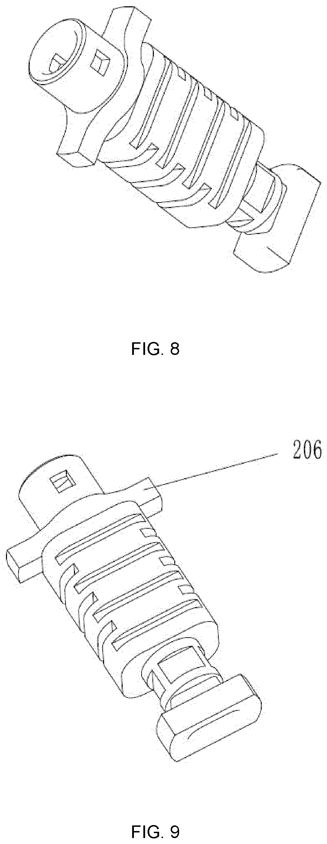

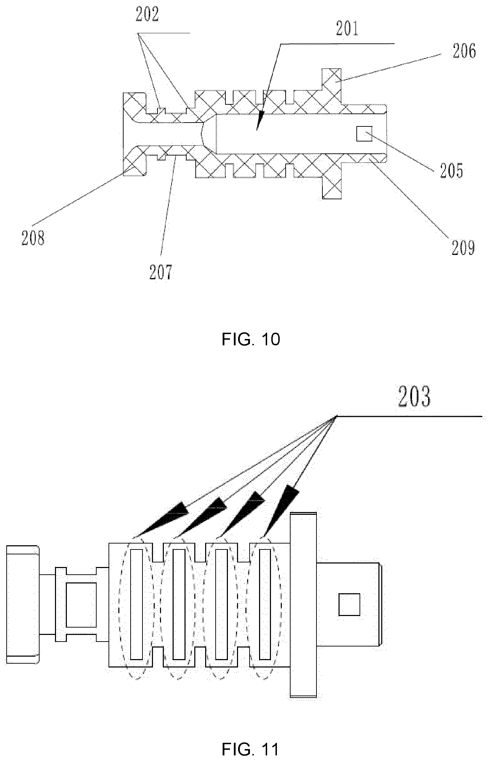

In embodiment 1 of an optical fiber connector having a self-floating core of the present invention, as shown in FIGs. 1-12, the connector includes a core part, a bracket 6, and an outer housing 7, where the core part includes a plug component 1, a supporting sleeve 2, a bonding sleeve 3, and a tail sheath 4. The connector is connected with an optical cable 5, and is plugged into a socket of RRU equipment, making an optical module plug of the RRU equipment plugged into the plug component 1.

The plug component 1 includes an upper plug housing 101, a lower plug housing 102, and a plurality of core plugs 103, where tails of the core plugs 103 are locked in the lower plug housing 102; and the upper plug housing 101 covers and is fixed on the lower plug housing 102 by means of a snap structure to fix the core plugs 103.

The optical cable 5 passes through the tail sheath 4 and penetrates into the bonding sleeve 3; the optical cable 5 branch out into a plurality of branch optical fibers 501 in the bonding sleeve 3; and the branch optical fibers 501 pass through the bonding sleeve 3 and the supporting sleeve 2 sequentially and then are connected with the corresponding core plugs 103. An extension direction of the optical cable 5 serves as an axial direction, a direction perpendicular to the axial direction serves as a radial direction, and the plug component 1 serves as a front end portion.

A cross section of a supporting sleeve 2 body in the radial direction is rectangular; an internal cavity 201, through which the branch optical fibers 501 pass, is formed in the supporting sleeve 2 in the axial direction; and grooves are formed in an outer wall of the supporting sleeve 2, including a supporting sleeve groove I 203 and a supporting sleeve groove II 204. The supporting sleeve groove I 203 is formed in a wide edge of the supporting sleeve 2, and the supporting sleeve groove II 204 is formed in a narrow edge of the supporting sleeve 2, and both extension directions of the supporting sleeve groove I 203 and the supporting sleeve groove II 204 are perpendicular to the axial direction. The supporting sleeve groove I 203 and the supporting sleeve groove II 204 are staggered in the axial direction, so that when the supporting sleeve 2 is stretched, compressed, or bent, micro-deflection of the core part is achieved.

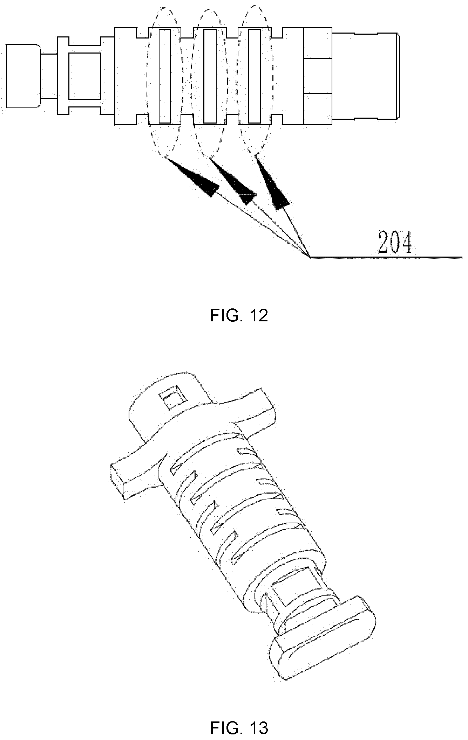

As an independent component, the supporting sleeve 2 has a shape and a size determinable according to a specific usage scenario and a number and a length of the branch optical fibers accommodated therein. For example, in embodiment 1, the cross section the supporting sleeve 2 body in the radial direction is rectangular; in embodiment 2, the cross section of the supporting sleeve 2 body in the radial direction is circular, as shown in FIG. 13; and in other embodiments, the cross section of the supporting sleeve 2 body in the radial direction may be elliptical or in other shapes. A plurality of groove groups are distributed circumferentially on the supporting sleeve 2, and a plurality of grooves in each groove group are aligned in the axial direction, and the grooves in the plurality of groove groups are distributed on the supporting sleeve 2 alternately.

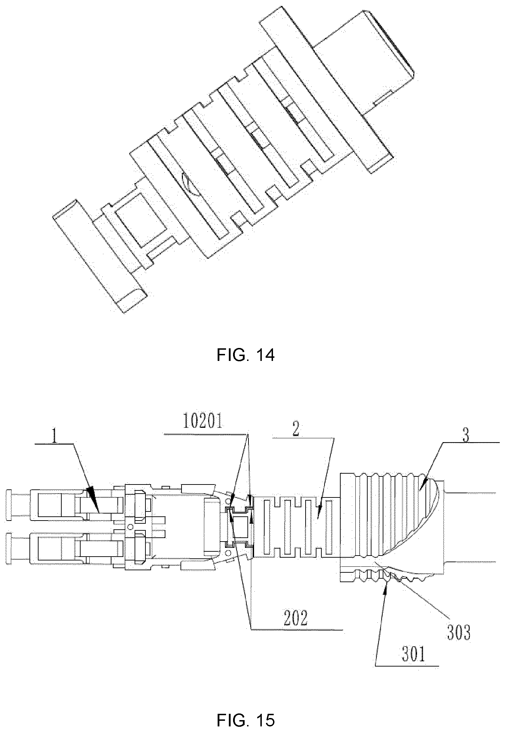

The alternately arranged grooves on the supporting sleeve 2 can be through grooves or non-through grooves; the through grooves communicate with the internal cavity 201 of the supporting sleeve 2; and the non-through grooves do not communicate with the internal cavity 201 of the supporting sleeve 2. In embodiment 1, the grooves on the supporting sleeve 2 are the non-through grooves. In embodiment 3, the grooves on the supporting sleeve 2 are the through grooves. As shown in FIG. 14, extension directions of the grooves are determined according to a required bending direction of the connector. Due to the plurality of groove groups circumferentially distributed on the supporting sleeve 2, the supporting sleeve 2 can be bent in any direction, and the grooves provide an avoidance space for the connector to bend.

The supporting sleeve 2 is made of rubber or other flexible materials, and can be stretched or compressed under the effect of an external force, so as to achieve stretching and compressing functions. Meanwhile, an interior of the supporting sleeve 2 is of a hollow structure; and its internal cavity has a diameter larger than outside diameters of all the accommodated branch optical fibers, allowing for accommodating a plurality of branch optical fibers of a multi-fiber optical cable to freely stretch or bend therein.

An axially extending connecting bulge 207 matched with the plug component 1 is arranged at a front end of the supporting sleeve 2, a through hole communicating with the internal cavity 201 is formed in the connecting bulge 207 for the branch optical fibers 501 to pass through, and a locking block 208 is arranged at a front end portion of the connecting bulge 207. A connecting convex key 202 is circumferentially arranged on an outer wall of the connecting bulge 207; a through groove, through which the branch optical fibers 501 pass, is formed in a tail of the lower plug housing 102; the through groove of the lower plug housing 102 is matched with the connecting bulge 207; and a connecting groove 10201 matched with the connecting convex key 202 is formed in an inner wall of the through groove. The connecting bulge 207 is nested in the through groove of the lower plug housing 102; a locking block 208 is locked in a cavity of the lower plug housing 102; and then, the upper plug housing 101 covers and is fixed on the lower plug housing 102, so that the locking block 208 is limited in the cavity of the lower plug housing 102, to achieve a tensile function between the supporting sleeve 2 and the plug component 1. The connecting convex key 202 is nested in the connecting groove 10201 while the locking block 208 is locked in the cavity of the lower plug housing 102; and after covering and fixing of the upper plug housing 101, the tensile function between the supporting sleeve 2 and the plug component 1 is further strengthened, as shown in FIG. 15. In other embodiments of the present invention, a shape of the connecting bulge 207 is determined according to the corresponding structure of the mated plug component. If the connecting convex key is arranged on the lower plug housing 102, the connecting groove matched with the connecting convex key can be formed in the connecting bulge 207 to ensure reliable connection between the plug component 1 and the supporting sleeve 2.

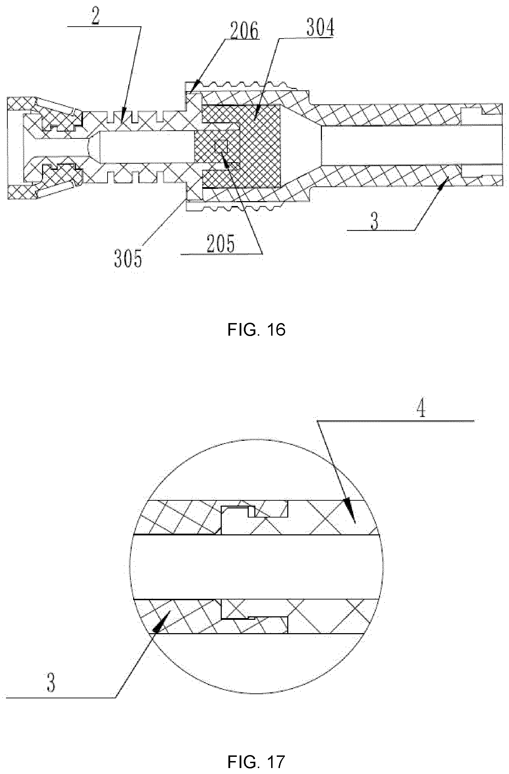

Limiting keys 206 and a strengthening bulge 209 which are matched with the bonding sleeve 3 are arranged at a rear end portion of the supporting sleeve 2. There are two limiting keys 206 arranged on an outer wall of the rear end portion of the supporting sleeve 2. The two limiting keys 206 extend in the radial direction and are arranged symmetrically. Limiting keyways 305 matched with the limiting keys 206 are formed in an inner wall of an internal cavity of a front end portion of the bonding sleeve 3 to achieve mechanically limiting and anti-rotation functions. The strengthening bulge 209 extends axially and is provided with an axially extending through hole which communicates with the internal cavity for the branch optical fibers to pass through. At least one glue filling hole 205 is provided through a wall of the strengthening bulge 209. When being filled in the glue filling region 304 of the internal cavity of the front end portion of the bonding sleeve 3, glue can flow through the glue filling hole 205 and play a tensile role after its curing. The rear end portion of the supporting sleeve 2 is inserted into the cavity of the front end portion of the bonding sleeve 3, so that the limiting keys 206 are nested in the limiting keyways 305; and then the glue is filled in the bonding sleeve 3, so that the supporting sleeve 2 and the bonding sleeve 3 are fixed, as shown in FIG.16.

The front end portion of the tail sheath 4 is inserted into the cavity of the rear end portion of the bonding sleeve 3, and the two are fixed by means of a locking bench-locking groove structure, as shown in FIG.17.

As shown in FIG.18, the bracket 6 is sleeved outsides the core part, and the outer housing 7 is sleeved outsides the bracket 6 and the core part. The outer housing 7 can rotate relative to the bracket 6, and move forward and backward relative to the bracket 6 in the axial direction during rotation. A sealing ring plugged into the socket for sealing and a structure matched with the socket and the outer housing 7 are arranged on an outer wall of a front end portion of the bracket 6. A locking structure matched with the socket is arranged at a front end portion of the outer housing 7, and the outer housing 7 is locked tightly with the socket during its forward movement.

The bracket 6, as a rotary body, is provided with an axially penetrating cavity inside; a guide key 605 is arranged on a wall of the internal cavity of the bracket 6 in the axial direction; a sliding keyway 303 matched with the guide key is formed in the outer wall of the bonding sleeve 3; the guide key corresponds to the sliding keyway 303 one to one; the bracket 6 can move in the axial direction; and at this time, the guide key slides in the sliding keyway 303. An axially extending suspension arm hole 602 which extends through a wall of the bracket 6 is formed in the wall; an axially extending suspension arm 603 is arranged in the suspension arm hole 602; and a locking pawl 601 is arranged at an end portion of the suspension arm 603, and extends toward the internal cavity of the bracket 6. Locking tooth groups are arranged on the outer wall of the bonding sleeve 3, higher than the outer wall of the bonding sleeve 3; a sliding keyway 303 is formed between two locking tooth groups; the locking tooth groups correspond to the lock pawls 601 one to one; each locking tooth group includes a plurality of locking teeth 301 distributed in the axial direction; and a locking groove 302 matched with each locking pawl 601 is formed between two adjacent locking teeth 301. If there are a plurality of guide keys 605 and a plurality of suspension arms 603 arranged, the guide keys 605 and the suspension arms 603 are circumferentially distributed on the wall of the bracket 6 at an interval; and correspondingly, the locking tooth groups and the sliding keyways 303 are circumferentially distributed on a wall of the bonding sleeve 3 at an interval.

An internal cone surface 701 is arranged on the outer housing 7, oriented toward a front side, and used for locking the locking pawls 601. A projection 604 is arranged on an outer wall, opposite to each locking pawl 601, of each suspension arm 603. During forward movement of the outer housing 7, the internal cone surface 701 squeezes the projection 604 to achieve strong matching between each locking pawl 601 and each locking groove 302, thereby achieving the locking and tensile functions of the connector.

When in use, an operator first inserts the plug component 1 into the corresponding socket 9, plugs an optical module plug 10 into it, adjusts a position of the bracket 6 relative to the bonding sleeve 3, making a front end portion of the bracket 6 inserted into the socket 9, and each locking pawl 601 locked in the corresponding locking groove 302. If an adjustment distance of the bracket 6 is an integer multiple of a center distance of the locking grooves, and a relative position between the optical module plug 10 and the socket 9 is matched with a relative position between the plug component 1 and the bracket 6, after the lock pawls 601 are locked in the locking groove 302, the supporting sleeve 2 is not stretched, compressed or bent. If the adjustment distance of the bracket 6 is not the integer multiple of the center distance of the locking grooves, in a case of the locking pawls 601 being locked in the front locking groove 302, the supporting sleeve 2 is compressed; and in a case of the locking pawls 601 being locked in the rear locking groove 302, the supporting sleeve 2 is stretched. The supporting sleeve 2 is stretched or compressed to adapt to the adjustment distance, so as to ensure accurate plugging between the plug component 1 and the optical module plug. If the relative position between the optical module plug 10 and the socket 9 is not matched with the relative position between the plug component 1 and the bracket 6, after the locking pawls 601 are locked in the corresponding locking groove 302, the supporting sleeve 2 is bent to ensure accurate plugging between the plug component 1 and the optical module plug. After the locking pawls 601 are locked in the corresponding locking groove 302, the outer housing 7 is rotated to move forward; and a connecting structure on the outer housing 7 is matched with a corresponding structure on the socket to achieve tight locking. During forward movement of the outer housing 7, the internal cone surface 701 of the outer housing 7 squeezes the locking pawls 601 on the bracket 6 to make them locked in a corresponding groove of the bonding sleeve 3 to achieve tension resistance of the optical cable.

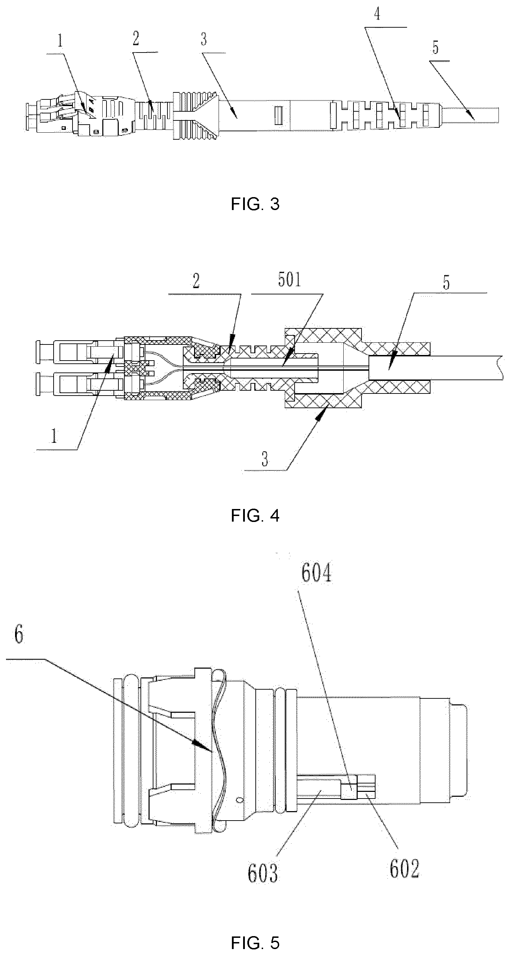

A relative rotation and movement structure of the outer housing 7 and the bracket 6 and the locking structure of them with the socket are both prior arts. For example, in the rotation and movement structure, a wave bulge as shown in FIG. 4 is arranged on the outer wall of the bracket 6, and a projection is arranged on an inner wall of the outer housing 7; and the outer housing 7 rotates, and the projection slides on the wave bulge, so that the outer housing 7 moves back and forth. In the locking structure, the outer housing 7 can be fixed with the socket by means of threaded connection. Other types of the rotation and movement structure and the locking structure can also be adopted, which will not be described here.

A micro-adjustment function of the supporting sleeve 2 can modify the existing structure. A stretching/compressing/bending function of the supporting sleeve 2 is matched with a stepped floating function of the bonding sleeve 3 to form a two-stage floating structure combining micro-adjustment and coarse-adjustment. The locking pawls, the locking teeth, and the locking grooves constitute a primary floating structure. If the primary floating structure cannot meet a requirement of a floating distance or an angle, the primary floating structure can be compensated by the compressing/stretching/bending function of the bonding sleeve 3. The two-stage floating structure of the present invention can also be applied to other connectors that need axial displacement adjustment. The micro-adjustment function of the supporting sleeve 2 can ensure reliable mating of the plug of the connector without affecting transmission performance.

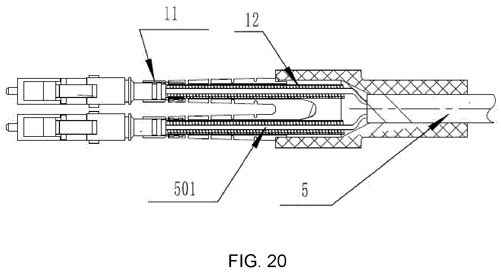

During assembly of the connector, as a single part, the supporting sleeve 2 is used to replace a multi-sheath structure shown in FIG. 20 in the prior art. The interior of the supporting sleeve 2 is of a hollow structure, and a retraction space for the branch optical fibers of the optical cable 5 therein is increased. If the supporting sleeve is compressed/stretched/bent, the branch optical fibers 501 can move freely inside the supporting sleeve 2. In this way, on one hand, a fixation method of the branch optical fibers 501 with the connector is simplified, a number of assembly parts is reduced, an operation process is simple, and production efficiency is improved; and on the other hand, an excess length of the optical cable from the front end of the plug component 1 to the front end of the bonding sleeve 3 is increased, which further weakens assembly difficulty.

In using the connector, if there is a connection failure, only the outer housing 7 of the connector needs to be removed during maintenance and inspection. The outer housing 7 is moved toward the rear end, and the bracket 6 is moved toward the rear end. In this way, a situation of the supporting sleeve 2 and the core part can be inspected, so that the connector is more maintainable than the existing structure.

In summary, in the present invention, on the basis of the existing connector, the supporting sleeve 2 is used as a branch part between the bonding sleeve 3 and the plug component 1 to replace an original branch structure; on the basis of retaining the stepped floating structure of the bonding sleeve 3, the secondary floating function is added to achieve a two-stage floating function and compensate the primary floating structure of the plug; and meanwhile, the core plug can swing in any radial direction to achieve the floating function in multiple directions, which solves the problem that an original structure can only swing axially in a single ditrction, solves the problems of a too high assembly requirement and a high failure rate in product use of the existing connector at the same time, and improves maintainability of the connector.

Although the embodiments of the present invention have been shown and described, those of ordinary skill in the art can understand that various changes, modifications, replacements, and variations can be made to these embodiments without departing from the principle and spirit of the present invention, and the scope of the present invention is defined by the appended claims and equivalents thereof.

## Claims

1. An optical fiber connector having a self-floating core, comprising a plug component (1) and a bonding sleeve (3), and further comprising a supporting sleeve (2) made of an elastic material, wherein one end of the supporting sleeve (2) is connected with the plug component (1), and the other end is connected with the bonding sleeve (3); and an end portion of an optical cable (5) is nested in the supporting sleeve (2), and an internal cavity (201), through which an optical fiber passes, is formed in the supporting sleeve (2).

2. The optical fiber connector having the self-floating core according to claim 1, wherein a groove is formed in the supporting sleeve (2) to provide an avoidance space for the supporting sleeve (2) to bend in a radial direction, the groove being axially distributed on an outer wall of the supporting sleeve (2), and extending in a direction perpendicular to an axial direction of the supporting sleeve (2).

3. The optical fiber connector having the self-floating core according to claim 2, wherein a cross section of a supporting sleeve (2) body in the radial direction is rectangular; the groove comprises a supporting sleeve groove I (203) and a supporting sleeve groove II (204); the supporting sleeve groove I (203) is formed in a wide edge of the supporting sleeve (2); the supporting sleeve groove II (204) is formed in a narrow edge of the supporting sleeve (2); and the supporting sleeve groove I (203) and the supporting sleeve groove II (204) are staggered in the axial direction.

4. The optical fiber connector having the self-floating core according to claim 2, wherein the cross section of the supporting sleeve (2) body is circular or elliptic.

5. The optical fiber connector having the self-floating core according to claim 1, wherein an axially extending connecting bulge (207) is arranged at a front end of the supporting sleeve (2), a through hole communicating with the internal cavity (201) is formed in the connecting bulge (207), and a locking block (208) is arranged at a front end portion of the connecting bulge (207); and the connecting bulge (207) and the locking block (208) are nested in a cavity of the plug component to achieve a tensile function between the supporting sleeve (2) and the plug component.

6. The optical fiber connector having the self-floating core according to claim 5, wherein a connecting groove is formed in the connecting bulge at the front end portion of the supporting sleeve (2) and a through groove at a rear end portion of the plug component (1); a connecting convex key is correspondingly arranged on the through groove at the rear end portion of the plug component (1) or the connecting bulge at the front end portion of the supporting sleeve (2); and the connecting groove is mutually matched with the connecting convex key.

7. The optical fiber connector having the self-floating core according to claim 1, wherein a rear end portion of the supporting sleeve (2) is located in a cavity formed in a front end portion of the bonding sleeve (3); and glue is filled in the cavity of the front end portion of the bonding sleeve (3) to fix the supporting sleeve (2).

8. The optical fiber connector having the self-floating core according to claim 7, wherein a limiting key (206) and an axially extending strengthening bulge (209) are arranged at the rear end portion of the supporting sleeve (2); a limiting keyway (305) matched with the limiting key (206) is formed in an inner wall of the front end portion of the bonding sleeve (3); a through hole, which communicates with the internal cavity (201) for a branch optical fiber to pass through, is formed in the strengthening bulge (209); and at least one glue filling hole (205) is formed in a wall of the strengthening bulge (209).

9. The optical fiber connector having the self-floating core according to claim 1, wherein a bracket (6) is slidably sleeved outsides the plug component (1), the bonding sleeve (2), and the supporting sleeve (3); an outer housing (7) is slidably sleeved outsides the bracket (6); a plurality of locking teeth (301) are distributed on an outer wall of the supporting sleeve (3) in the axial direction; a locking groove (302) is formed between two adjacent locking teeth; an axially extending suspension arm hole (602) which extends through a wall of the bracket (6) is formed in the wall; an axially extending suspension arm (603) is arranged in the suspension arm hole (602); a locking pawl (601) matched with the locking groove is arranged at an end portion of the suspension arm (603), and is nested in the locking groove (302) in a natural state; a projection (604) is arranged on an outer wall of the suspension arm (603); an internal cone surface (701) is arranged on the outer housing (7), and squeezes the projection (604) to achieve strong matching between the locking pawl (601) and the locking groove (302).

10. The optical fiber connector having the self-floating core according to claim 9, wherein a guide key in the axial direction is arranged on a wall of an internal cavity of the bracket (6); and a sliding keyway (303) slidably matched with the guide key is formed in an outer wall of the bonding sleeve (3).
